# EUROPEAN PATENT SPECIFICATION

(11) **EP 3 591 436 B1**
(45) Date of publication and mention of the grant of the patent: **08.05.2024**
(21) Application number: 18181448.4
(22) Date of filing: 03.07.2018
(51) Int. Cl.: G01S 17/10, G01S 17/42, G01S 7/481

(54) **LIDAR SYSTEM AND LIDAR METHOD FOR A MOTOR VEHICLE**
LIDAR-SYSTEM UND LIDAR-VERFAHREN FÜR EIN KRAFTFAHRZEUG
SYSTÈME LIDAR ET PROCÉDÉ LIDAR POUR UN VÉHICULE À MOTEUR

(43) Date of publication of application: 08.01.2020
(73) Proprietor: Magna Electronics Sweden AB, 447 83 Vårgårda (SE); Beamagine S.L., 08755 Castellbisbal (ES)
(72) Inventor: KÄLLHAMMER, Jan-Erik, 582 46 Linköping (SE); RIU, Jordi, 08660 Balsareny (ES); RODRIGO, Noel, 25005 Lleida (ES); SANABRIA, Ferran, 08912 Badalona (ES); ROYO, Santiago, 08755 Castellbisbal (ES)
(74) Representative: Müller Verweyen

(56) References cited:
- US-A1- 2016 282 468
- US-A1- 2017 328 990
- US-B1- 9 383 753
- US-B1- 9 869 754

## Description

The invention relates to a lidar system for a motor vehicle comprising at least one laser light source adapted to generate a light beam which is directed to one single scanning device, wherein the one scanning device is adapted to scan a field of view by deflecting the light beam to a scanned surface in the environment of the vehicle along one of a plurality of scanning directions, at least one light sensing device adapted to sense light which is incident on said light sensing device, and a data processing device. The invention also relates to a corresponding lidar method.

Such systems are generally known, for example from WO 2012 123809 A1 and WO 2014 125153 A1. Herein, a surface is illuminated by a light beam that originates from a light source and is reflected by the surface. The reflected light beam is incident on a lens arrangement and transmitted in a specific manner to a light sensing device. The time-of-flight of the light beam is indicative of the distance between the system and a point on the surface, which spatial location is derivable from the time-of-flight and the instantaneous scanning direction.

The field of view and the resolution of such systems are limited by optical and mechanical properties of the lidar system, in particular its laser light source, scanning device and light sensing device, and the size of the entrance pupil through which the light enters the system. Obtaining a large resolution in a large field of view is technically demanding and may produce redundant image and/or depth information while obtaining a small resolution is simpler and cost-effective but relevant information may not be obtained.

The amount of light emitted by the light source and passing through the entrance pupil is crucial for the light sensing capabilities of the sensing device and thus the resolution and/or range. The laser light source, scanning device and light sensing device, and the size of the entrance pupil of the lens arrangement needs to balance the requirements of resolution, field of view and sufficient light transmission to provide long-range measurements.

US 9,869,754 B1 discloses a lidar system according to the preamble of claim 1.

The problem underlying the invention is to improve the light sensing capabilities of the lidar system and method.

The invention solves this problem with the features of the independent claims.

The invention suggests that said one scanning device is adapted to scan different regions of said field of view with different resolutions in order to provide a cost-effective improvement of the light sensing capabilities. The invention allows to scan different regions, which may be of different interest of the lidar system, with different resolutions adapted to the interest the lidar system, or the application in the vehicle it is suited to, has in the different regions.

According to the invention, the different regions comprise at least one high-resolution region, which the scanning device is adapted to scan with a high resolution, and at least one low-resolution region, which the scanning device is adapted to scan with a low resolution. This acts towards balancing requirements of desired resolutions in different regions and an effective scanning. The high-resolution region can typically be a region that is of more interest than the low-resolution region.

Preferably, said regions comprise two regions with different resolutions, e.g. a low-resolution region and a high-resolution region. However, it is also possible that said regions comprise more than two regions with different resolutions, e.g. a low-resolution region, a mid-resolution region, a high-resolution region, and a very-high-resolution region. The number of regions and/or resolutions is not limited. The resolution and the size of the regions can be adaptable, e.g., according to the driving scenario, driving speed, direction, etc. The regions covered by the one scanning device may not overlap, partially overlap, and/or overlap completely, providing at the same time a high resolution and a low resolution image of said regions, possibly with different update frequencies. The regions may also be adjacent to each other, for example horizontally, vertically and/or oblique, i.e., different regions can contact each other with zero or essentially zero distance between each other.

To scan the field of view, the scanning device preferably changes the scanning direction of the light beam, and/or deflects the light beam and/or a plurality of light beams towards the plurality of scanning directions. The plurality of scanning directions along which the light beam can be deflected is called a scan pattern of the one scanning device. The resolution can be defined and/or determined by the scan pattern of the scanning device comprising the plurality of scanning directions along which the light beam can be deflected. The scan pattern is preferably heterogeneous, i.e. the scan pattern comprises regions that are scanned with a different resolution than other regions. The scanning is preferably performed according to a pre-defined scanning strategy.

The resolution can refer to the spatial resolution. For example, the scan pattern can comprise regions of different spatial resolution, i.e., the numbers of scanning directions in different regions of the same size are different and/or the relative distance between neighboring points in the scanning pattern is different. The resolution can refer to the time resolution. The scanning device is adapted to change the scanning direction of the light beam with different speed and/or at a different rate. The resolution can preferably refer to spatial and time resolution.

In a preferred embodiment, the at least one high-resolution region and the at least one low-resolution region overlap at least partially in an overlap region in order to acquire information of the overlap region with low resolution and with high resolution. For example, scanning the high-resolution region can require more time for scanning and data processing than scanning the low-resolution region. By overlapping the high-resolution region and the low-resolution region at least partially, information from the low-resolution region can compensate for the slower scanning in the high-resolution region.

The low-resolution region can be at least as large as the high-resolution region to provide the lidar system that uses the effective low-resolution scanning for determining a low-resolution depth image in a larger region than the high-resolution depth image region.

The regions are preferably pre-defined. According to the invention, the high-resolution region is in the principal locomotion direction of the motor vehicle, and the low-resolution region is laterally from the principal locomotion direction of the motor vehicle, in order to scan central regions of larger interest with a higher resolution than lateral regions of lower interest. Typically, the motor vehicle moves with its front in the forward locomotion direction. In other words, the high-resolution region is located mainly in a central region in front of the vehicle and the low-resolution region is located in at least one peripheral region lateral from the vehicle.

In a preferred embodiment, the high-resolution region in the central region can be scanned with a longer range than the peripheral regions. In a preferred embodiment, the at least one peripheral region comprises a left peripheral region located to the left of the central region and a right peripheral region located in the right of the central region. Preferably, the left and the right peripheral regions are scanned in a symmetric manner, i.e., the resolution and/or range of scanning the peripheral regions is equal. The high-resolution region preferably encloses with the forward locomotion direction a smaller angle than each low-resolution region.

According to the invention, a single scanning device is adapted to scan said different regions of said field of view with different resolutions to reduce the number of required components. For example, the scanning device is adapted to move and/or rotate with different speed and thereby deflect the light beam with different speed through the different regions. Different regions and/or scan zones can be served by the same scanning device.

The at least one laser light source and/or the at least one light sensing device can be arranged in a single housing to provide a cost-effective lidar system. The at least one laser light source and/or the at least one light sensing device housed in a single housing allows for effective electrical connections between e.g. the at least one laser light source, the at least one light sensing device, and/or the data processing device.

Advantageously, the lidar system comprises at least two light sensing devices to provide for example different light sensing devices for different resolutions and/or directions. In this embodiment, the lidar system comprises preferably less scanning devices than light sensing devices to save components. For example, the lidar system can comprise only one scanning device but two detectors. If at least two housings are provided, the at least two light sensing devices can be comprised in different housings.

Preferably, the one scanning device is adapted to scan the high-resolution region and the low-resolution region in the same scanning direction to improve the scanning efficiency. In this embodiment, the scanning device is adapted to scan the field of view preferably according to a scan pattern and to perform according movements. The movement of the scanning device does not need to be interrupted for scanning different regions which improves the scanning efficiency. This embodiment goes beyond two combined lidar systems in a single enclosure as it is more cost-effective to use the scanning device for scanning different regions with different resolutions.

In a preferred embodiment, the one scanning device is adapted to perform oblique, horizontal and/or vertical scanning to acquire depth information that is rasterized, efficiently to process and/or efficiently to visualize. The scanning does not need to be strictly oblique, horizontal and/or vertical, but can deviate for example by up to 45°, preferably up to 30°, more preferably up to 15°. The scanning device can be adapted to use any direction of movement of the light beam, including horizontal, vertical, oblique, and/or arbitrary patterns.

For an improved light sensing, in an advantageous embodiment, the lidar system comprises at least one light deflection device. The at least one light deflection device comprises an array of light deflection elements. The orientation of each light deflection element is switchable between at least a first orientation and a second orientation, to redirect light which is incident on said light deflection element from the scanned surface in at least a first deflection direction corresponding to the first orientation or a second deflection direction corresponding to the second orientation. The light sensing device is adapted to sense a light beam which is redirected in the first deflection direction.

In the following the invention shall be illustrated on the basis of preferred embodiments with reference to the accompanying drawings, wherein:
- Fig. 1: shows a schematic view of a motor vehicle with a lidar system;
- Fig. 2: shows an embodiment an optical unit of a lidar system;
- Fig. 3: shows an embodiment an optical unit of a lidar system not falling under the invention;
- Fig. 4: shows a schematic scanning pattern according to one embodiment; and
- Fig. 5: shows a lidar system not falling under the invention mounted on a motor vehicle.

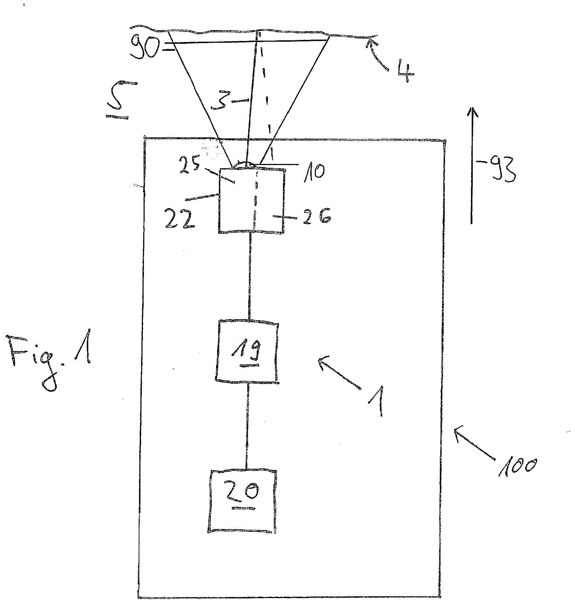

As shown in Figure 1, the lidar system 1 is mounted in/on a vehicle 100 to capture images of a scanned surface 4 in the environment 5 of the vehicle 100. The lidar system 1 comprises an optical unit 22 having a light emitting unit 25 and a light receiving unit 26, and a data processing device 19. The lidar system 1 can further include other detection systems and/or sensors such as radar or other cameras.

The light emitting unit 25 comprises a light source 2 that is adapted to emit a light beam 3, which is preferably directed through a first lens arrangement 10 towards the environment 5 of the vehicle 100. The light beam 3 eventually interacts with the environment 5, in particular the scanned surface 4 or dust, snow, rain, and/or fog in the environment 5. The light beam 3 is reflected and a reflected light beam 16 of the light beam 3 enters the optical unit 22, more particular the receiving unit 26 thereof, preferably through a lens system 11. The light beam 3 and/or the reflected light beam 16 determine and/or define the field of view 90 of the lidar system 1. In addition to the reflected light beam 16 of the light beam 3, other light from the environment 5 enters the optical unit 22. The light entering the optical unit 22 is preferably recorded by the optical unit 22 and the recorded image data is processed by the data processing device 19.

A safety system 20 of the motor vehicle 100 is able to trigger defined driving action and/or driver assistance action to assist the driver, e.g. braking, acceleration, steering, showing information etc., based on the data provided by the data processing device 19.

In the embodiment shown in Figure 1, the lidar system 1 comprises a single optical unit 22 mounted in the front part of a vehicle 100 and directed towards the front of the vehicle 100. The field of view 90 is located mainly in the front of the motor vehicle 100, i.e. the lidar system 1 is directed towards the front of the motor vehicle 100 and/or towards a principal locomotion direction 93.

Other and/or additional positions in/on the vehicle 100 are possible, for example the lidar system 1 could be mounted at and/or directed towards the rear, the left, and/or the right. The lidar system 1 can also comprise a plurality of optical units 22, emitting units 25, and/or receiving units 26 that are mounted and/or directed for example towards the rear, the left, and/or the right. The viewing direction of the optical unit 22, emitting unit 25 and/or the receiving unit 26 can be variable. A plurality of optical units 22, emitting units 25, and/or receiving units 26 allows covering a wide field of view 90, even up to 360° around the vehicle 100. A plurality of optical units 22, emitting units 25, and/or receiving units 26 could communicate with separate data processing devices 19, communicate with a single data processing device 19, or work with a master-slave configuration. In particular, the images recorded from the environment 5 could be used for physical calibration of the plurality of the optical units 22, emitting units 25, and/or receiving units 26 to cover a large field of view 90.

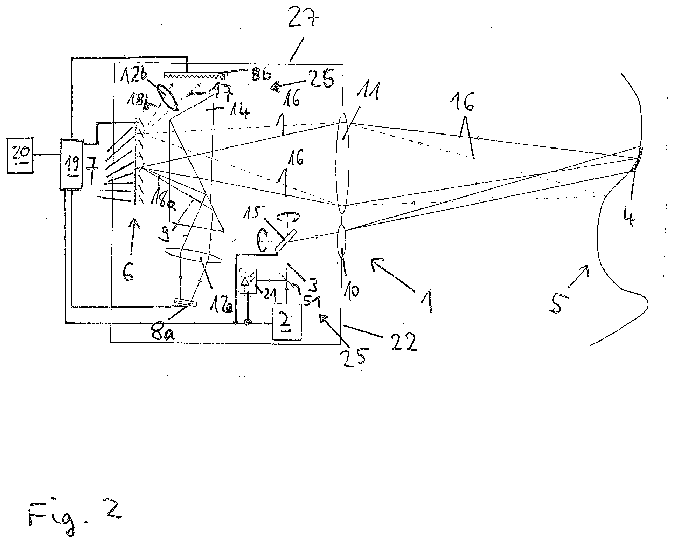

Figure 2 shows a lidar system 1 in more detail. The light source 2 is arranged in the light emitting unit 25. The light source 2 preferably comprises a laser, including laser diodes, fiber lasers, etc. But also, other embodiments of the light source 2 are possible, e.g. LEDs, or polarized light sources of different wavebands, adapted to correspond with the recording capabilities of light sensing devices 8a, 8b comprised by the optical unit 22 and/or by the receiving unit 26.

The optical unit 22 comprises a beam splitter 51, for example a semi-transparent mirror, for splitting the light beam 3 generated by the light source 2. The use of the light source 2, a plurality of light sources, and/or the beam splitter 51 determines the sensing and detection capabilities of the lidar system 1 and preferably provides multi-specular methods, improvement of the sensitivity of retro-reflected beams, and/or road friction estimations.

The light source 2 is adapted to generate a beam 3 directed to a scanned surface 4 in the environment 5 of the vehicle 100. The light source 2 can preferably generate pulsed laser light with a specific wavelength to feed the beam splitter 51 to split the incoming light and generate the plurality of light beams.

A portion of the light beam 3 and/or any of the light beams is preferably divided or split by the beam splitter 51 and directed towards a trigger device 21 comprised in the emitting unit 25 to allow an accurate time-of-flight estimation. The trigger device 21 is preferably in communication with the data processing device 19 to start and/or synchronize the time-of-flight measurement in order to realize a lidar system and to allow depth imaging. The light beam 3 can in some embodiments be widened by suited optical components, e.g., a lens arrangement 10, which may defocus, and thereby widen, the light beam 3 towards the scanned surface 4.

The light beam 3 emitted from the light source 2 is redirected by a scanning device 15 comprised by and/or comprised in the emitting unit 25, for example a mirror rotatable around at least one axis.

The scanning device 15, like a mirror, a group of mirrors, a prism arrangement such as Risley prisms, and/or other optical component and/or a group thereof, is adapted to be controllable by and in communication with the data processing device 19. The scanning device 15, which may in particular be at least one MEMS device, is preferably adapted to be rotatable around at least two axes, allowing scanning of the environment 5 of the vehicle 100. For example, a horizontal scanning device could be arranged to perform the rotation around a first axis and a vertical scanning device could be arranged to perform a rotation around a second axis. By means of the scanning device 15, the light beam 3 can be directed preferably sequentially towards points or spots on the scanned surface 4.

The scanning device 15 is adapted to scan a field of view 90 by deflecting the light beam 3 to the scanned surface 4 along one of a plurality of scanning directions. The field of view 90 comprises different regions 91a, 91b, 92a, 92b and the scanning device 15 is adapted to scan different regions 91a, 91b, 92a, 92b with different resolution. Preferably, the scanning device 15 scans the field of view 90 as a combination of high-resolution regions 91a, 91b and low-resolution regions 92a, 92b, whereby the resolution of the high-resolution regions 91a, 91b is larger than the resolution of the low-resolution regions 92a, 92b.

In Figure 2, the light beam 3 is directed to the scanned surface 4 and is reflected by the scanned surface 4 or by other reflectors and/or scatterers in the environment 5, and a reflected light beam 16 of the light beam 3 is reflected and enters the optical unit 22 and/or the receiving unit 26, e.g., by passing the lens system 11, alternatively an entrance window.

In a preferred embodiment, the lens system 11 can be a complex optical system involving a number of different single lenses, beam splitters, polarizers, filters, diaphragms or other optical components arranged in combination in order to provide a given optical performance. Preferably, the lens system 11 comprises a lens objective.

The reflected light beam 16 transmitted by the lens system 11 enters the optical unit 22 and/or the receiving unit 26 and is preferably directed along a detector path towards a prism 14 placed within the optical unit 22 and/or the receiving unit 26, allowing for optical path division and/or light deflection.

The lens system 11 is adapted to focus the reflected light beam 16 to a light deflection device 6 comprising a plurality of light deflection elements 7. The deflection device 6 is in communication with the data processing device 19. The data processing device 19 is adapted to control the deflection elements 7 of the light deflection device 6.

In this embodiment, the lidar system 1 comprises a single light deflection device 6. The light deflection device 6 can comprise a planar basis, e.g., a printed circuit board, a substrate, and/or a wafer, on which an array of light deflection elements 7 is arranged. The array of light deflection elements 7 can for example be one- or two-dimensional, i.e., a line-array or a matrix. The light deflection elements 7 can be controllable by a common controller of the light deflection device 6.

Each light deflection element 7 is adapted to switch its orientation between at least a first orientation and a second orientation allowing the light beam traveling along the detector paths to be deflected in a first deflection direction 9 if the light is incident on a deflection element 7 oriented in the first orientation or in a second deflection direction 17 if the light is incident on a light deflection element 7 oriented in the second orientation. The switch of the orientation of any of the light deflection elements 7 preferably changes its tilt with respect to a rotational axis. The light deflection elements 7 can be adapted to be switchable between two, a plurality of, and/or a continuous band of orientations.

In a preferred embodiment, the light deflection device 6 is a DMD, i.e., a digital micro mirror device on a chip with a plurality of controllable micro mirrors as deflection elements 7. In this embodiment, the at least two orientations of each of the light deflection elements 7 are the orientations of micro-mirrors that are individually rotatable controlled by electrostatic interactions. Alternatives for the deflection device 6 to the DMD may be other active optical elements, in particular pixelated arrays (such as LCDs or Liquid crystal tunable filters) or even deformable mirrors. In the pixelated arrays, each pixel is a deflection element 7 and in each pixel a crystal can change its orientation to influence light transmission, deflection and/or reflection properties. In LCDs, additional passive or active optical elements, such as additional DMDs, LCDs, and/or deformable mirrors, can be used in the system to obtain better data quality. Active strategies for local image quality improvement using a deformable mirror in the optical path or a LCD device used as a shutter or as a phase modulator can enhance the quality of the data.

Each light deflection element 7 is adapted to redirect light which is incident on said light deflection element 7 from the scanned surface 4, and to redirected a light beam 18a, 18b in at least either the first deflection direction 9 corresponding to the first orientation or the second deflection direction 17 corresponding to the second orientation. The difference of the first deflection direction 9 and the second deflection direction 17 of light deflected by a single light deflection element 7 arises from a switch and/or toggle between the different orientations of the light deflection element 7.

Incident light on a deflection element 7 oriented in the first orientation is preferably deflected as first light beam 18a via the prism 14 towards a first light sensing device 8a, preferably through a first lens assembly 12a. Incident light on a deflection element 7 oriented in the second orientation is preferably deflected as second light beam 18b towards a second light sensing device 8b, preferably through a second lens assembly 12b.

In this embodiment, the lidar system 1 comprises the first light sensing device 8a and the second light sensing device 8b which is separate from the first light sensing device 8a. Preferably, the first light sensing device 8a and the second light sensing device 8b are mounted on different printed circuit boards, are based on separate wafers, on different substrates, and/or are separate sensors. That is, the photoelectric active areas of the light sensing device 8a, 8b that are used for data acquisition and light sensing are separated from each other by a distance that is determined by the arrangement of the light sensing devices 8a, 8b.

Each of the light sensing devices 8a, 8b has a light sensitive surface on which, for example, a photoelectric active area resides and/or an array of light sensitive pixels is arranged. Preferably, each light sensing device 8a, 8b comprises an array of pixels, e.g., a line array or a pixel matrix. The normal of the light sensitive surface of each light sensing device 8a, 8b defines a direction in which the light sensing capabilities are particularly effective, the quantum efficiency is maximum, and/or towards which the center of the field of view of the light sensing device 8a, 8b is directed.

The normal of the light sensitive surface of the first light sensing device 8a is different from the normal of the light sensitive surface of the second light sensing device 8b, i.e., the first light sensing device 8a faces towards a different direction than the second light sensing device 8b. The light sensing devices 8a, 8b are preferably arranged in conjunction with the lens assemblies 12a, 12b. The normal vectors are not parallel but enclose a non-zero angle as claimed in the constructive properties of the lens assemblies 12a, 12b, the light deflection device 6, and/or the light sensing devices 8a, 8b. Preferably, the lens assemblies 12a, 12b are arranged to focus light beams 18a, 18b redirected by a light deflection element 7. In this embodiment, the light sensing devices 8a, 8b are arranged so that the light sensitive surface face each other.

In this embodiment, the lidar system 1 comprises a single scanning device 15 and two light sensing devices 8a, 8b. In other embodiments, it is also possible that the lidar system 1 comprises a single light sensing device only.

In Figure 2, the lens assemblies 12a, 12b are arranged so that any one of the lens assemblies 12a, 12b has an optical axis that coincides with any normal of the light sensitives surface of the light sensing devices 8a, 8b. Thus, the optical axis of the lens assembly 12a that focuses light on the first light sensing device 8a is different from the optical axis of the lens assembly 12b that focuses light on the second light sensing device 8b.

The data processing device 19 can be adapted to control the capture of images by the light sensing device 8a, 8b, time-of-flight measurements and the control of the deflection device 6, receive the electrical signal containing the information from the light sensing devices 8a, 8b, and/or the trigger device 21 and from the light deflection device 6. The pre-processor may be realized by a dedicated hardware circuit, for example a Field Programmable Gate Array (FPGA) or an Application Specific Integrated Circuit (ASIC). Alternatively, the pre-processor, or part of its functions, can be realized in the data processing device 19 or a System-On-Chip (SoC) device comprising, for example, FPGA, processing device, ARM and/or microprocessor functionality.

Image and data processing is carried out by corresponding software in the data processing device 19. The image and data processing in the processing device 19 may for example comprise identifying and preferably also classifying possible objects in the surrounding of the vehicle, such as pedestrians, other vehicles, bicyclists and/or large animals, tracking over time the position of object candidates identified in the captured images, computing depth images based on the time-of-flight values, and activating or controlling at least one safety system 20 for example depending on an estimation performed with respect to a tracked object, for example an estimated collision probability. The safety system 20 may in particular comprise a display device to display information on a possibly detected object and/or on the environment of the vehicle. However, the invention is not limited to a display device. The safety system 20 may in addition or alternatively comprise a warning device adapted to provide a collision warning to the driver by suitable optical, acoustical and/or haptic warning signals; one or more restraint systems such as occupant airbags or safety belt tensioners, pedestrian airbags, hood lifters and the like; and/or dynamic vehicle control systems such as brake or steering control devices.

The data processing device 19 can also be used as input to highly automated, piloted, and/or autonomous driving functions in a vehicle.

The data processing device 19 is preferably a digital device which is programmed or programmable and preferably comprises a microprocessor, micro-controller, digital signal processor (processing device), field programmable gate array (FPGA), or a System-On-Chip (SoC) device, and preferably has access to, or comprises, a memory device. The data processing device 19, pre-processing device and the memory device are preferably realised in an on-board electronic control unit (ECU) and may be connected to other components of the lidar system 1 via a separate cable or a vehicle data bus. In another embodiment the ECU and one or more of the lidar systems 1 can be integrated into a single unit, where a one box solution including the ECU and all lidar systems 1 can be preferred. All steps from data acquisition, imaging, depth estimations, pre-processing, processing to possible activation or control of safety system are performed automatically and continuously during driving in real time.

In a particular application, LIDAR, polarimetric, RGB and/or FPA images are gathered together using electronics, including frame-grabber and the data processing device 19, to have them processed and support the decision-making process of the safety system 20.

All parts of the receiving unit 26, in particular the lens system 11, the prism 14, the light sensing devices 8a, 8b and the light deflection device 6 are in this embodiment housed in and/or attached to the same single housing 27. The light emitting unit 25 and the light receiving unit 26 are housed in the same housing 27.

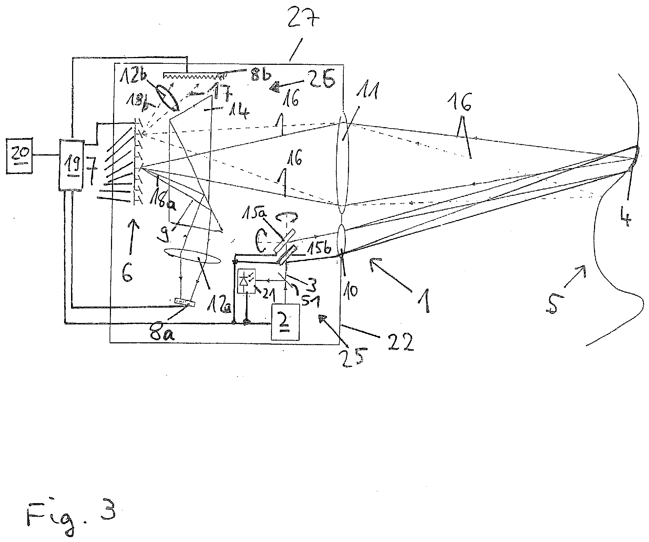

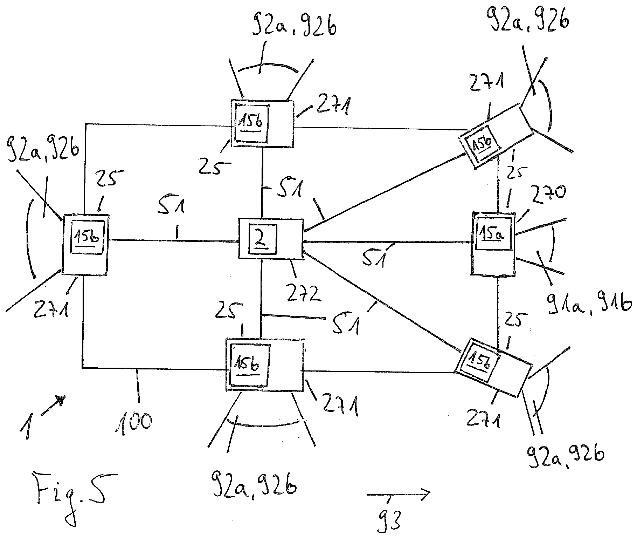

It is also possible to arrange the emitting unit 25 and the receiving unit 26 in different housings 27, or that the lidar system 1 comprises a plurality of emitting units 25 and/or receiving units 26. The lidar system 1 may be in two or more housings 27 and/or enclosures, see Figure 5, or in a single housing 27 as shown in Figures 2 and 3.

The lens system 11 can preferably be linked to at least one shutter. The at least one shutter is adapted to change between a light blocking and a light transmitting state. The at least one shutter can be arranged upstream or downstream the lens system 11 with respect to the optical path. The shutter can be adapted to communicate with the data processing device 19 to be coordinated and/or to provide data or with the light deflection device 6 to advantageously coordinate or being coordinated, reducing the ambient light sources thus improving the signal to noise ratio (SNR). A sequential shutting and closing of the individual shutters allows sequential scanning of regions 91a, 91b, 92a, 92b of the overall field of view 90.

Embodiments without a light deflection device 6 are possible. In such embodiments, a light sensing device 8 could for example be arranged instead of the light deflection device 6 in Figures 2 or 3. Other detection strategies could also be used.

In the embodiment of Figure 3, the lidar system 1 comprises a plurality of scanning devices 15a, 15b, preferably a low-resolution scanning device 15b and a high-resolution scanning device 15a different from the low-resolution scanning device 15b. The low-resolution scanning device 15a can be adapted to scan the low-resolution regions 92a, 92b and the high-resolution scanning device 15b can be adapted to scan the high-resolution regions 91a, 91b. The lidar system 1 can comprise a combined scanner with a high-resolution scanning device 15a for the high-resolution region 91a, 91b in the front of the vehicle 100 and a low-resolution scanning device 15b for the low-resolution region 92a, 92b different from, but preferably overlapping at least partially the high-resolution region 91a, 91b in some region.

In the present embodiment, the low-resolution scanning device 15b splits the light beam 3 and comprises for example a semi-transparent mirror, adapted to split the single light beam 3 from the light source 2 into a first light beam and a second light beam. In other embodiments, the beam splitter may be independent from any scanning device 15a, 15b. For example, the light beam 3 from the light source 2 could be split by a separate beam splitter into first and second light beams, before the first light beam is directed on the high-resolution scanning device 15a and the second light beam is directed on the low-resolution scanning device 15b. In a still further embodiment, at least two light beams could be directed at a single scanning device 15 (see Figure 2) under different angles, such that the light beams outgoing from the scanning device 15 are also directed out in different angles.

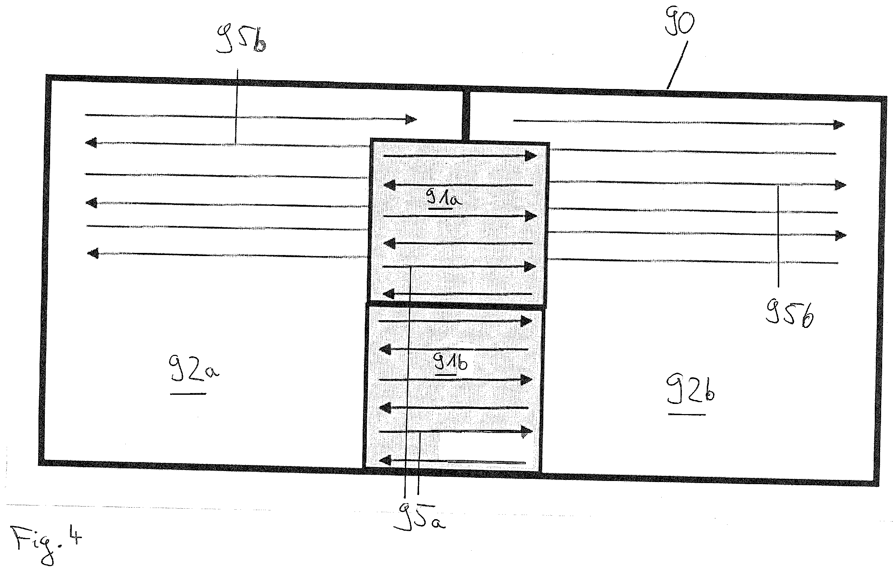

Figure 4 shows a schematic scanning pattern 95a, 95b according to a horizontal scanning of the field of view 90 by way of example. The scanning pattern 95a, 95b is indicated by short arrows 95a in two high-resolution regions 91a, 91b and by long arrows 95b in two low-resolution regions 92a, 92b. In this embodiment, the one scanning device 15is adapted to scan the two high-resolution regions 91a, 91b with a larger resolution than the two low-resolution regions 92a, 92b, i.e., the one scanning device 15 scans the high-resolution regions 91a, 91b preferably faster and/or with a higher density of light beams 3 per unit area compared to the low-resolution regions 92a, 92b.

The high-resolution regions 91a, 91b can preferably be located in a central region in front of the motor vehicle 100, i.e. in its principal locomotion direction 93, as indicated in Figures 1 and 5. As shown in Figure 4, the high-resolution regions 91a, 91b encloses a smaller angle with the principal locomotion direction 93 than the low-resolution regions 92a, 92b. The low-resolution regions 92a, 92b can be located laterally from the motor vehicle 100.

In this embodiment, it is also possible that the regions 91a, 91b, 92a, 92b overlap at least partially, i.e. the high-resolution regions 91a, 91b could be located at least partially within the low-resolution regions 92a, 92b. The high-resolution regions 91a, 91b are smaller than the low-resolution regions 92, 92b. The high-resolution regions 91a, 91b and the low-resolution regions 92, 92b are scanned line by line, i.e., the scanning in performed in the horizontal along a line and after scanning one line, a subsequent line above or below is scanned.

The regions 91a, 91b, 92a, 92b can be scanned in the same direction. For example, the low-resolution region 92a, 92b is scanned with a movement of the one scanning device 15 in a certain direction. If the scanning device 15 moves to the high-resolution region 91a, 91b so that the light beam 3 is directed towards the high-resolution region 91a, 91b, the direction of the movement of the scanning device 15 can be maintained for scanning the high-resolution region 91a, 91b. After scanning the high-resolution region 91a, 91b, the direction of the movement of the scanning device 15 can change according to the scanning pattern 95a, 95b. However, the high-resolution region 91a, 91b may also be scanned in one direction in a first high-resolution sub-region 91a and in a different direction in a second high-resolution sub-region 91b.

A single scanning device 15 is adapted to scan all regions 91a, 91b, 92a, 92b.

The one scanning device 15 can be a double resolution scanning device that is adapted to scan regions 91a, 91b, 92a, 92b with at least two different resolutions. The double high-resolution regions 91a, 91b and/or the double low-resolution regions 92a, 92b are an example and not required. The number of adjacent regions 91a, 91b, 92a, 92b is for example two, but more than two is possible.

At least two regions 91a, 91b, 92a, 92b can be aligned. For example, as shown in Figure 4, the high-resolution regions 91a, 91b are aligned vertically and the low-resolution regions 92a, 92b are aligned horizontally. The central zone, i.e., the high-resolution region 91a, 91b, can be illuminated by the light beam 3 entering in an angle from below and above. The wide zone, i.e., the low-resolution region 92a, 92b, is preferably served by two light beams 3 entering from the left and the right as shown in Figure 4.

Figure 5 shows a lidar system 1 mounted on a motor vehicle 100 with a plurality of emitting units 25 mounted on the motor vehicle 100. Figure 5 is a top view of the motor vehicle 100 and the front of the vehicle 100 corresponds to the part of the vehicle 100 pointing in a principal locomotion direction 93.

According to the shown embodiment, the lidar system 1 comprises a light source 2 adapted to generate a light beam 3 (not shown in the Figure) and to feed the emitting units 25 with light. The emitting units 25 are preferably fed by the light source 2 via fiber bundles 51. The light source 2 feeds a plurality of fiber bundles 51 with light. The fiber bundles 51 transmit the light received from the light source 2 towards an emitting unit 25 each, whereby each emitting unit 25 emits a light beam 3 (not depicted in Figure 5), where it is understood that each emitting unit 25 corresponds to an optical fiber or fiber bundle 51. The light source 2 can be enclosed in a casing 272, preferably separate from any of the emitting units 25.

It is also possible that the vision system 1 comprises a plurality of light sources 2, wherein each light source 2 is adapted to feed at least one of the emitting units 25 with light.

In Figure 5, the light sensing and/or receiving units 26 are not depicted for clarity. It is possible to mount each emitting unit 25 and the corresponding end of the corresponding fiber / fiber bundle 51 in a corresponding receiving unit 26 to form an optical unit 22 which is adapted to emit and receive light as shown in Figures 2 and 3, except the light source 2 is preferably separately arranged in the casing 272. It is also possible to arrange receiving units 26 independently of any emitting unit 25.

Each emitting unit 25 comprises at least one light scanning device 15, 15a, 15b. The light beams 3 are deflected by a scanning device 15 and/or a plurality of scanning devices 15a, 15b as described above with reference to Figures 2 to 4.

In Figure 5, one emitting unit 25 is mounted in the front part and directed towards the front of the motor vehicle 100 in the principal locomotion direction 93, two emitting units 25 are mounted at the left and right and directed towards the left and right, respectively, and one emitting unit 25 is mounted in the back part and directed towards the back. Each emitting unit 25 on the left or the right can be directed and/or oriented in different directions to allow a wider combined field of view 90.

As shown in Figure 5, the emitting unit 25 in the front of the motor vehicle comprises a high-resolution scanning device 15a. The emitting units 26 at the left, right, and back of the vehicle comprise a low-resolution scanning device 15b. Each emitting unit 25 comprises a separate enclosure 270, 271. The high-resolution scanning device 15a is enclosed in a first enclosure 270 and the low-resolution scanning device 15b is enclosed in a second enclosure 271 separate from said first enclosure 270 and/or separate from the casing 272 of the light source 2. As shown in Figure 3, it is possible to arrange a plurality of scanning devices 15a, 15b within a common housing 27.

In Figure 5, each emitting unit 25 defines and/or determines a scanned region 91a, 91b, 92a, 92b which are comprised in the field of view 90. The regions 91a, 91b, 92a, 92b can overlap, but the regions 91a, 91b, 92a, 92b can also be nonoverlapping. The size of any of the regions 91a, 91b, 92a, 92b is defined by the at least one scanning device 15, 15a, 15b and/or the emitting unit 25.

The sizes of the regions 91a, 91b, 92a, 92b are preferably different in a specific manner. However, the size of any two regions 91a, 91b, 92a, 92b could equal each other. A smaller region, e.g. a high-resolution region 91a, 91b preferably directed towards the principal locomotion direction 93, corresponds to a narrower field of view 90 but allows an advantageous angular resolution, a larger range of measurement and/or sampling rate as a larger region, e.g. a low-resolution region 92a, 92b preferably directed towards the left, right and/or back of the motor vehicle 100. This is particularly important in the principal locomotion direction 90 of the vehicle 100 in which the velocity is typically larger than in other directions. The results of different imaging modalities may be combined in the interest of the performance of the overall lidar system 1.

The plurality of emitting units 25 allows covering a wide field of view 90, up to 360° around the vehicle 100. An example of an automotive application could consider different specifications for front, rear, and/or side views. It is also possible that a lidar system 1 comprises a minimum of two scanning devices 15a, 15b adapted to deflect and/or sent the light beam 3 and/or a plurality of light beams in different directions. The scanning direction and the relative orientation of the multiple scanning regions 91a, 91b, 92a, 92b could be variable.

In another embodiment, at least one additional beam splitter can be arranged in the optical path of one or more of the light beams 3. For example, to feed a group of emitting units 25, a single light beam 3 could be directed by an optical fiber 51 towards the group of emitting units 25, where the light beam 3 is split and the split portions of the light beam 3 are guided to the emitting units 25 to be emitted into the environment 5.

When a larger range is required for an emitting unit 25 to observe the environment 5 far apart, several optical fibers 51 and/or fiber-optic units can be bundled together to enable a higher peak power of the light beam 3. For example, if more range is required in principal locomotion direction 93, two or more laser bundles can be combined into the same emitting unit 25 to emit two or more times the power of a single laser beam. To adjust the field of view, the range, the spatial resolution and/or other technical details, the specifications of the light beams 3 may not be equivalent for each light beam 3 emitted by an emitting unit 25.

In other words, the implementation of the multiple sensor approach to acquire data of the full surrounding shown in Figure 5 can have six emitting units 25 each of which covering an angle in the range up to 120°, preferably at least 15°, so that the total field of view defined by the composition of the fields of view of the individual emitting units 25 adds up to 360°. The fields of view of each two of the emitting units 25 can overlap to ensure a reliable coverage of the overall 360° field of view and/or to enable image merging in the data processing device 19. It is also possible to cover a smaller total field of view, preferably 60°, more preferably 90°, even more preferably 120° and most preferably 180°. For example, it could be advantageous to acquire data in the front of a vehicle 100 when the vehicle 100 moves forward and in the back when the vehicle 100 moves backwards. In one embodiment, a combined scanner could be a multiple scanning device 15a, 15b comprising multiple scanning heads in different emitting units 25.

The scanning pattern 95a, 95b as shown in Figure 4 could be applied in the front of the motor vehicle 100. The emitting unit 25 at the front of the motor vehicle 100 can be adapted to scan the high-resolution regions 91a, 91b in front of the motor vehicle 100 and/or two of the emitting units 25 directed to the left and right of the motor vehicle 100 can be adapted to scan the low-resolution regions 92a, 92b lateral from the motor vehicle 100.

Preferably, one emitting units 25 and/or low-resolution scanning devices 15 is arranged at each side of the vehicle 100, i.e. at the left and the right of the motor vehicle 100. In this embodiment, the two emitting units 25 and/or low-resolution scanning devices 15 are preferably of the same type.

## Claims

1. A lidar system (1) for a motor vehicle (100) comprising
- at least one laser light source (2) adapted to generate a light beam (3) which is directed to one single scanning device (15),
- wherein the one scanning device (15) is adapted to scan a field of view (90) by deflecting the light beam (3) to a scanned surface (4) in the environment (5) of the vehicle (100) along one of a plurality of scanning directions;
- at least one light sensing device (8a, 8b) adapted to sense light which is incident on said light sensing device (8); and
- a data processing device (19);
**characterized in that**
- said one single scanning device (15) is adapted to scan different regions (91a, 91b, 92a, 92b) of said field of view (90) with different resolutions by changing the scanning direction of the light beam (3) with different speed and/or at a different rate,
- said regions (91a, 91b, 92a, 92b) comprise at least one high-resolution region (91a, 91b) and at least one low-resolution region (92a, 92b),
- the one scanning device (15) is arranged to locate the high-resolution region (91a, 91b) in the principal locomotion direction (93) of the motor vehicle (100), and
- the one scanning device (15) is arranged to locate the low-resolution region (92a, 92b) laterally from the principal locomotion direction (93) of the motor vehicle (100).

2. The lidar system (1) as claimed in claim 1, **characterized in that**
- the low-resolution region (92a, 92b) is at least as large as the high-resolution region (91a, 91b).

3. The lidar system (1) as claimed in any one of the preceding claims, **characterized in that** said different regions (91a, 91b, 92a, 92b) are arranged adjacent to each other.

4. The lidar system (1) as claimed in any one of the preceding claims, **characterized in that**
- the one scanning device (15) is adapted to perform horizontal, vertical and/or oblique scanning.

5. The lidar system (1) as claimed in any one of the preceding claims, **characterized in that**
- the lidar system (1) comprises at least one light deflection device (6); wherein
- the at least one light deflection device (6) comprises an array of light deflection elements (7), wherein the orientation of each light deflection element (7) is switchable between at least a first orientation and a second orientation, to redirect a light beam (18a, 18b) which is incident on said light deflection element (7) from the scanned surface (4) in at least a first deflection direction (9) corresponding to the first orientation or a second deflection direction (17) corresponding to the second orientation; and
- the light sensing device (8a) is adapted to sense a light beam (18a) which is redirected in the first deflection direction (9).

6. Motor vehicle (100) comprising a lidar system (1) according to any of the preceding claims.

7. A lidar method for a motor vehicle (100) comprising
- generating at least one light beam (3) and directing said light beam (3) to one single scanning device (15);
- scanning the field of view (90) by said one scanning device (15) deflecting the light beam (3) to a scanned surface (4) in the environment (5) of the vehicle (100) along one of a plurality of scanning directions, and
- sensing light which is incident on a light sensitive surface of at least one light sensing device (8), **characterized in that**
- said one single scanning device (15) scanning different regions (91a, 91b, 92a, 92b) of said field of view (90) with different resolutions by changing the scanning direction of the light beam (3) with different speed and/or at a different rate,
- said regions (91a, 91b, 92a, 92b) comprise at least one high-resolution region (91a, 91b) and at least one low-resolution region (92a, 92b),
- the one scanning device (15) is arranged to locate the high-resolution region (91a, 91b) in the principal locomotion direction (93) of the motor vehicle (100), and
- the one scanning device (15) is arranged to locate the low-resolution region (92a, 92b) laterally from the principal locomotion direction (93) of the motor vehicle (100).

## Patentansprüche

1. Ein Lidar-System (1) für ein Kraftfahrzeug (100), umfassend
- mindestens eine Laserlichtquelle (2), die dazu eingerichtet ist, einen Lichtstrahl (3) zu erzeugen, der auf eine einzige Scanvorrichtung (15) gerichtet ist,
- wobei die eine Scanvorrichtung (15) dazu eingerichtet ist, ein Sichtfeld (90) durch Ablenken des Lichtstrahls (3) auf eine gescannte Oberfläche (4) in der Umgebung (5) des Fahrzeugs (100) entlang einer von mehreren Scanrichtungen zu scannen;
- mindestens eine Lichterfassungsvorrichtung (8a, 8b),
die dazu eingerichtet ist, Licht zu erfassen, das auf die Lichterfassungsvorrichtung (8) einfällt; und
- eine Datenverarbeitungsvorrichtung (19);
**dadurch gekennzeichnet, dass**
- die eine einzelne Scanvorrichtung (15) dazu eingerichtet ist, verschiedene Bereiche (91a, 91b, 92a, 92b) des Sichtfeldes (90) mit unterschiedlichen Auflösungen zu scannen, indem die Scanrichtung des Lichtstrahls (3) mit unterschiedlicher Geschwindigkeit und/oder mit einer unterschiedlichen Rate geändert wird,
- die Bereiche (91a, 91b, 92a, 92b) mindestens einen hochauflösenden Bereich (91a, 91b) und mindestens einen niedrigauflösenden Bereich (92a, 92b) umfassen,
- die eine Scanvorrichtung (15) so angeordnet ist, dass sie den hochauflösenden Bereich (91a, 91b) in der Hauptfortbewegungsrichtung (93) des Kraftfahrzeugs (100) lokalisiert, und
- die eine Scanvorrichtung (15) so angeordnet ist, dass sie den niedrigauflösenden Bereich (92a, 92b) seitlich von der Hauptbewegungsrichtung (93) des Kraftfahrzeugs (100) lokalisiert.

2. Das Lidar-System (1) nach Anspruch 1, **dadurch gekennzeichnet, dass**
- der niedrigauflösende Bereich (92a, 92b) mindestens so groß ist wie der hochauflösende Bereich (91a, 91b).

3. Das Lidar-System (1) nach einem der vorangehenden Ansprüche, **dadurch gekennzeichnet, dass** die verschiedenen Bereiche (91a, 91b, 92a, 92b) angrenzend zueinander angeordnet sind.

4. Das Lidar-System (1) nach einem der vorangehenden Ansprüche, **dadurch gekennzeichnet, dass**
- die eine Scanvorrichtung (15) dazu eingerichtet ist, horizontales, vertikales und/oder schräges Scannen durchzuführen.

5. Das Lidar-System (1) nach einem der vorangehenden Ansprüche, **dadurch gekennzeichnet, dass**
- das Lidar-System (1) mindestens eine Lichtablenkungsvorrichtung (6) umfasst; wobei
- die mindestens eine Lichtablenkungsvorrichtung (6) eine Anordnung von Lichtablenkungselementen (7) umfasst, wobei die Ausrichtung jedes Lichtablenkungselements (7) zwischen mindestens einer ersten Ausrichtung und einer zweiten Ausrichtung umschaltbar ist, um einen Lichtstrahl (18a, 18b), der von der gescannten Oberfläche (4) auf das Lichtablenkungselement (7) einfällt, in mindestens eine erste Ablenkungsrichtung (9), die mit der ersten Ausrichtung korrespondiert, oder eine zweite Ablenkungsrichtung (17), die mit der zweiten Ausrichtung korrespondiert, umzulenken; und
- die Lichterfassungsvorrichtung (8a) dazu eingerichtet ist, einen Lichtstrahl (18a) zu erfassen, der in die erste Ablenkungsrichtung (9) umgelenkt ist.

6. Kraftfahrzeug (100), umfassend ein Lidar-System (1) nach einem der vorangehenden Ansprüche.

7. Ein Lidar-Verfahren für ein Kraftfahrzeug (100), umfassend
- Erzeugen mindestens eines Lichtstrahls (3) und Richten des Lichtstrahls (3) auf eine einzige Scanvorrichtung (15) ;
- Scannen des Sichtfeldes (90) durch die eine Scanvorrichtung (15), die den Lichtstrahl (3) auf eine gescannte Oberfläche (4) in der Umgebung (5) des Fahrzeugs (100) entlang einer von mehreren Scanrichtungen ablenkt, und
- Erfassen von Licht, das auf eine lichtempfindliche Oberfläche von mindestens einer Lichterfassungsvorrichtung (8) einfällt,
**dadurch gekennzeichnet, dass**
- die eine einzige Scanvorrichtung (15) unterschiedliche Bereiche (91a, 91b, 92a, 92b) des Sichtfeldes (90) mit unterschiedlichen Auflösungen scannt, indem sie die Scanrichtung des Lichtstrahls (3) mit unterschiedlicher Geschwindigkeit und/oder mit einer unterschiedlichen Rate ändert,
- die Bereiche (91a, 91b, 92a, 92b) mindestens einen hochauflösenden Bereich (91a, 91b) und mindestens einen niedrigauflösenden Bereich (92a, 92b) umfassen,
- die eine Scanvorrichtung (15) so angeordnet ist, dass sie den hochauflösenden Bereich (91a, 91b) in der Hauptfortbewegungsrichtung (93) des Kraftfahrzeugs (100) lokalisiert, und
- die eine Scanvorrichtung (15) so angeordnet ist, dass sie den niedrigauflösenden Bereich (92a, 92b) seitlich von der Hauptfortbewegungsrichtung (93) des Kraftfahrzeugs (100) lokalisiert.

## Revendications

1. Un système lidar (1) pour un véhicule à moteur (100) comprenant
- au moins une source de lumière laser (2) adaptée pour générer un faisceau lumineux (3) qui est orienté vers un unique dispositif de balayage (15),
- dans l'unique dispositif de balayage (15) est adapté pour balayer un champ de vision (90) par la déflexion du faisceau lumineux (3) vers une surface balayée (4) dans l'environnement (5) du véhicule (100) le long d'une direction parmi une pluralité de directions de balayage ;
- au moins un dispositif de détection de lumière (8a, 8b) adapté pour détecter de la lumière qui est incidente sur ledit dispositif de détection de lumière (8) ; et
- un dispositif de traitement de données (19) ;
**caractérisé en ce que**
- ledit unique dispositif de balayage (15) est adapté pour balayer différentes zones (91a, 91b, 92a, 92b) dudit champ de vision (90) avec différentes résolutions en modifiant la direction de balayage du faisceau lumineux (3) avec différentes vitesses et/ou à une fréquence différente,
- lesdites zones (91a, 91b, 92a, 92b) comprennent au moins une zone à haute résolution (91a, 91b) et au moins une zone à basse résolution (92a, 92b),
- l'unique dispositif de balayage (15) est agencé pour situer la zone à haute résolution (91a, 91b) dans la direction principale de locomotion (93) du véhicule à moteur (100), et
- l'unique dispositif de balayage (15) est agencé pour situer la zone à basse résolution (92a, 92b) latéralement par rapport à la direction principale de locomotion (93) du véhicule à moteur (100).

2. Le système lidar (1) selon la revendication 1, **caractérisé en ce que**
- la zone à basse résolution (92a, 92b) est au moins aussi grande que la zone à haute résolution (91a, 91b).

3. Le système lidar (1) selon l'une quelconque des revendications précédentes, **caractérisé en ce que**
- lesdites différentes zones (91a, 91b, 92a, 92b) sont agencées de manière adjacente les unes aux autres.

4. Le système lidar (1) selon l'une quelconque des revendications précédentes, **caractérisé en ce que**
- l'unique dispositif de balayage (15) est adapté pour effectuer un balayage horizontal, vertical et/ou oblique.

5. Le système lidar (1) selon l'une quelconque des revendications précédentes, **caractérisé en ce que**
- le système lidar (1) comprend au moins un dispositif déflecteur de lumière (6) ; dans lequel
- l'au moins un dispositif déflecteur de lumière (6) comprend un réseau d'éléments déflecteurs de lumière (7), l'orientation de chaque élément déflecteur de lumière (7) pouvant être permutée entre au moins une première orientation et une seconde orientation, pour rediriger un faisceau lumineux (18a, 18b) qui est incident sur ledit élément déflecteur de lumière (7) depuis la surface balayée (4) dans au moins une première direction de déflexion (9) correspondant à la première orientation ou une seconde direction de déflexion (17) correspondant à la seconde orientation ; et
- le dispositif de détection de lumière (8a) est adapté pour détecter un faisceau lumineux (18a) qui est redirigé dans la première direction de déflexion (9).

6. Un véhicule à moteur (100) comprenant un système lidar (1) selon l'une quelconque des revendications précédentes.

7. Un procédé lidar pour un véhicule à moteur (100) comprenant de
- générer au moins un faisceau lumineux (3) et orienter ledit faisceau lumineux (3) vers un unique dispositif de balayage (15) ;
- balayer le champ de vision (90) par la déflexion par ledit unique dispositif de balayage (15) du faisceau lumineux (3) sur une surface balayée (4) dans l'environnement (5) du véhicule (100) le long d'une direction parmi une pluralité de directions de balayage, et
- détecter de la lumière qui est incidente sur une surface photosensible d'au moins un dispositif de détection de lumière (8),
**caractérisé en ce que**
- ledit unique dispositif de balayage (15) balaye différentes zones (91a, 91b, 92a, 92b) dudit champ de vision (90) avec différentes résolutions en modifiant la direction de balayage du faisceau lumineux (3) avec différentes vitesses et/ou à une fréquence différente,
- lesdites zones (91a, 91b, 92a, 92b) comprennent au moins une zone à haute résolution (91a, 91b) et au moins une zone à basse résolution (92a, 92b),
- l'unique dispositif de balayage (15) est agencé pour situer la zone à haute résolution (91a, 91b) dans la direction principale de locomotion (93) du véhicule à moteur (100), et
- l'unique dispositif de balayage (15) est agencé pour situer la zone à basse résolution (92a, 92b) latéralement par rapport à la direction principale de locomotion (93) du véhicule à moteur (100).
